# EUROPÄISCHE PATENTANMELDUNG

(11) **EP 2 644 956 A1**
(43) Veröffentlichungstag der Anmeldung: **02.10.2013**
(21) Anmeldenummer: 13156782.8
(22) Anmeldetag: 26.02.2013
(51) Int. Cl.: F16L 37/084

(54) **Steckverbindungsanordnung**

(30) Priorität: 26.03.2012 DE 102012005929
(71) Anmelder: VERITAS AG, 63571 Gelnhausen (DE)
(72) Erfinder: Netzer, Heribert, 63457 Hanau (DE); Emmerling, Alexander, 61118 Bad Vilbel (DE); Pingel, Steffen, 38162 Lehre (DE)
(74) Vertreter: Witte, Weller & Partner

(57) **Zusammenfassung**

Die vorliegende Erfindung betrifft eine Steckverbindungsanordnung (10) zum lösbaren Verbinden von Fluidleitungen, mit einem Grundkörper (12), der eine Anschlussleitung (14) und eine radiale Einschuböffnung (20) aufweist, wobei der Grundkörper (12) mit einer ersten der Fluidleitungen verbindbar ist, und wobei ein Anschlussstutzen (50), der mit einer zweiten der Fluidleitungen verbindbar ist, auf die Anschlussleitung (14) aufsteckbar ist, um mit der Anschlussleitung (14) eine dichte Verbindung zu bilden, und einem Fixierelement (22), das in der radialen Einschuböffnung (20) aufgenommen und in der Einschuböffnung (20) in axialer Richtung der Anschlussleitung (14) fixiert ist, um den Anschlussstutzen (50) in einer Einbauposition festzulegen, wobei das Fixierelement (22) einen Fixierabschnitt (60) aufweist, der derart ausgebildet ist, dass der Fixierabschnitt (60) beim Aufstecken des Anschlussstutzens (50) in radialer Richtung bewegt und das Fixierelement (22) in radialer Richtung vorgespannt wird und den Anschlussstutzen (50) in der Einbauposition festlegt.

## Beschreibung

Die vorliegende Erfindung betrifft eine Steckverbindungsanordnung zum lösbaren Verbinden von Fluidleitungen, mit einem Grundkörper, der eine Anschlussleitung und eine radiale Einschuböffnung aufweist, wobei der Grundkörper mit einer ersten der Fluidleitungen verbindbar ist und wobei ein Anschlussstutzen, der mit einer zweiten der Fluidleitungen verbindbar ist, auf die Anschlussleitung aufsteckbar ist, um mit der Anschlussleitung eine dichte Verbindung zu bilden, und mit einem Fixierelement, das in der radialen Einschuböffnung aufgenommen und in der Einschuböffnung in axialer Richtung der Anschlussleitung fixiert ist, um den Anschlussstutzen in einer Einbauposition festzulegen.

Aus dem Stand der Technik, insbesondere im Bereich der Verbrennungsmotorentechnik, ist es bekannt, Fluidleitungen zum Umpumpen von Medien mittels Steckverbindungen miteinander zu verbinden. Dabei ist es besonders wichtig, dass die Fluidleitungen eine dichte und mit einem Innendruck belastbare Verbindung bilden. Weiterhin ist es wichtig, dass die Steckverbindungen universell ausgebildet sind, also dass eine Steckverbindung an mehrere Leitungen anschließbar ist, um die Anzahl von unterschiedlichen verwendeten Bauteilen zu reduzieren.

Bei den Steckverbindungen im Automobilbereich ist es besonders wichtig, dass die Steckverbindung eine zuverlässige und langlebige Verbindung bildet und gleichzeitig im Reparaturfall zerstörungsfrei gelöst werden kann.

Üblicherweise werden derartige Steckverbindungen mittels zwei aufeinandersteckbaren Rohrabschnitten realisiert, die mittels einer Schraub- oder einer Klammerverbindung aneinander fixiert werden. Die Rohre werden bei der Montage zunächst aufeinandergesteckt und in eine endgültige Montageposition gebracht. Danach wird die Klammer oder die Schraubverbindung an der Steckverbindung angebracht, um die beiden Rohrabschnitte fest miteinander zu verbinden.

Nachteilig dabei ist es, dass derartige Steckverbindungen im Allgemeinen technisch aufwendig sind und mit großem Montageaufwand montiert werden müssen.

Es ist daher die Aufgabe der vorliegenden Erfindung, eine Steckverbindungsanordnung zum lösbaren Verbinden von Fluidleitungen bereitzustellen, die eine zuverlässige Verbindung der Fluidleitungen bildet und gleichzeitig mit geringem Montageaufwand montiert werden kann.

Diese Aufgabe wird bei der eingangs genannten Steckverbindungsanordnung dadurch gelöst, dass das Fixierelement einen Fixierabschnitt aufweist, der derart ausgebildet ist, dass der Fixierabschnitt beim Aufstecken des Anschlussstutzens in radialer Richtung bewegt und das Fixierelement in radialer Richtung vorgespannt wird und den Anschlussstutzen in der Einbauposition festlegt.

Dadurch, dass der Fixierabschnitt des Fixierelementes beim Aufstecken des Anschlussstutzens in radialer Richtung vorgespannt wird, kann das Fixierelement eine Haltekraft aufbauen, die den Anschlussstutzen in der Einbauposition festlegt. Dabei bildet der Fixierabschnitt mit dem Anschlussstutzen in der Einbauposition vorzugsweise eine formschlüssige Verbindung. Dadurch, dass der Fixierabschnitt beim Aufstecken des Anschlussstutzens in radialer Richtung bewegt wird, entfällt ein zusätzlicher Montageschritt, bei dem das Fixierelement auf den in der Einbauposition befindlichen Anschlussstutzen gesteckt werden muss. Im Ergebnis wird somit durch die radiale Vorspannung der Anschlussstutzen in der Einbauposition zuverlässig festgelegt und die Montage erleichtert, da ein nachträgliches Aufstecken des Fixierelements entfällt. Somit kann die erfindungsgemäße Steckverbindungsanordnung eine lösbare Verbindung von Fluidleitungen zuverlässig mit geringem Montageaufwand realisieren.

In einer Ausführungsform ist es besonders bevorzugt, wenn das Fixierelement eine Metallklammer aufweist.

Dadurch kann mit technisch geringem Aufwand ein elastisches Fixierelement bereitgestellt werden, das in radialer Richtung vorgespannt werden und den Anschlussstutzen in der Einbauposition zuverlässig festlegen kann.

Es ist weiterhin bevorzugt, wenn der Fixierabschnitt in einer Vormontageposition, in der der Anschlussstutzen auf die Anschlussleitung aufgesteckt wird, wenigstens abschnittsweise koaxial zu der Anschlussleitung angeordnet ist.

Dadurch ist eine einfache und zuverlässige Montage möglich, da der Anschlussstutzen beim Aufstecken zwangsläufig den Fixierabschnitt in radialer Richtung aufweitet und so entsprechend radial vorspannt.

Es ist weiterhin bevorzugt, wenn der Grundkörper einen Axialanschlag aufweist, an dem der Anschlussstutzen in der Einbauposition zur Anlage kommt.

Dadurch ist die Einbauposition in axialer Richtung definiert, wodurch das Fixierelement bei der Montage zuverlässig eine Verbindung mit dem Anschlussstutzen bilden kann.

Es ist weiterhin bevorzugt, wenn die Einschuböffnung in radialer Richtung neben der Anschlussleitung angeordnet ist.

Dadurch kann das Fixierelement mit geringem Aufwand in der Einschuböffnung angeordnet werden und zuverlässig an dem Anschlussstutzen angreifen, um eine feste Verbindung zu bilden.

Es ist weiterhin bevorzugt, wenn die Einschuböffnung als Schlitz ausgebildet ist, der sich senkrecht zu einer Längsachse der Anschlussleitung erstreckt und eine senkrecht zu der Anschlussleitung ausgerichtete Führungsfläche aufweist, an der das Fixierelement geführt ist.

Dadurch kann das Fixierelement mit geringem Montageaufwand zuverlässig positioniert werden, so dass der Fixierabschnitt beim Aufstecken des Anschlussstutzens in radialer Richtung bewegt werden kann.

Es ist weiterhin bevorzugt, wenn das Fixierelement in der Einschuböffnung in radialer Richtung beweglich gelagert ist.

Dadurch kann das Fixierelement mit geringem Montageaufwand aus der radialen Einschuböffnung herausgezogen und somit die Steckverbindung zerstörungsfrei gelöst werden.

Es ist weiterhin bevorzugt, wenn ein Endabschnitt des Anschlussstutzens in der Einbauposition zwischen dem Axialanschlag und der radialen Einschuböffnung angeordnet ist.

Dadurch kann der Fixierabschnitt zuverlässig an dem Anschlussstutzen angreifen.

Es ist weiterhin bevorzugt, wenn der Axialanschlag wenigstens abschnittsweise kegelförmig ausgebildet ist und die kegelförmigen Abschnitte koaxial zu der Anschlussleitung angeordnet sind.

Dadurch kann der Axialanschlag mit einer Fase des Anschlussstutzens eine Anlagefläche bilden, wodurch auch bei sehr kleinen Abmessungen eine Beschädigung des Anschlussstutzens bei der Montage vermieden werden kann.

Es ist weiterhin bevorzugt, wenn der Grundkörper einstückig mit der Anschlussleitung, dem Axialanschlag und der Führungsfläche ausgebildet ist.

Dadurch lässt sich die Steckverbindungsanordnung mit geringem Aufwand beispielsweise im Spritzgussverfahren fertigen.

Es ist weiterhin bevorzugt, wenn die Anschlussleitung eine umfängliche Nut aufweist, in der ein ringförmiges Dichtelement angeordnet ist.

Dadurch können Flüssigkeitsleckagen der Steckverbindung vermieden werden.

Es ist weiterhin bevorzugt, wenn der Grundkörper einstückig mit wenigstens einem zweiten Anschlussstutzen ausgebildet ist, der mit einer der Fluidleitungen verbindbar ist.

Dadurch lässt sich der Grundkörper mit geringem Montageaufwand an eine bestehende Fluidleitung anschließen.

Im Ergebnis kann durch die erfindungsgemäße Steckverbindungsanordnung der Montageaufwand reduziert werden, da das vormontierte Fixierelement beim Aufstecken des Anschlussstutzens beispielsweise mittels einer Fase oder dergleichen an dem Anschlussstutzen aufgeweitet werden und somit vorgespannt werden kann, um bei Erreichen der Einbauposition mit beispielsweise einer Nut in dem Anschlussstutzen eine feste Verbindung zu bilden. Der Montageaufwand ist durch die erfindungsgemäße Anordnung deshalb reduziert, da ein nachträglicher Montageschritt des Fixierelements entfällt und lediglich der Anschlussstutzen auf die Anschlussleitung aufgeschoben werden muss.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Ausführungsbeispiele der Erfindung sind in der Zeichnung dargestellt und werden in der nachfolgenden Beschreibung näher erläutert. Es zeigen:
- Fig. 1: eine erfindungsgemäße Steckverbindungsanordnung in perspektivischer Darstellung;
- Fig. 2a und b: schematische Schnittansichten zur Erläuterung der Funktionsweise der Steckverbindungsanordnung aus Fig. 1;
- Fig. 3: eine schematische Darstellung der Steckverbindungsanordnung in axialer Blickrichtung der Anschlussleitung;
- Fig. 4: eine perspektivische Explosionsdarstellung der Steckverbindungsanordnung; und
- Fig. 5: eine weitere Ausführungsform der erfindungsgemäßen Steckverbindungsanordnung in perspektivischer Explosionsdarstellung.

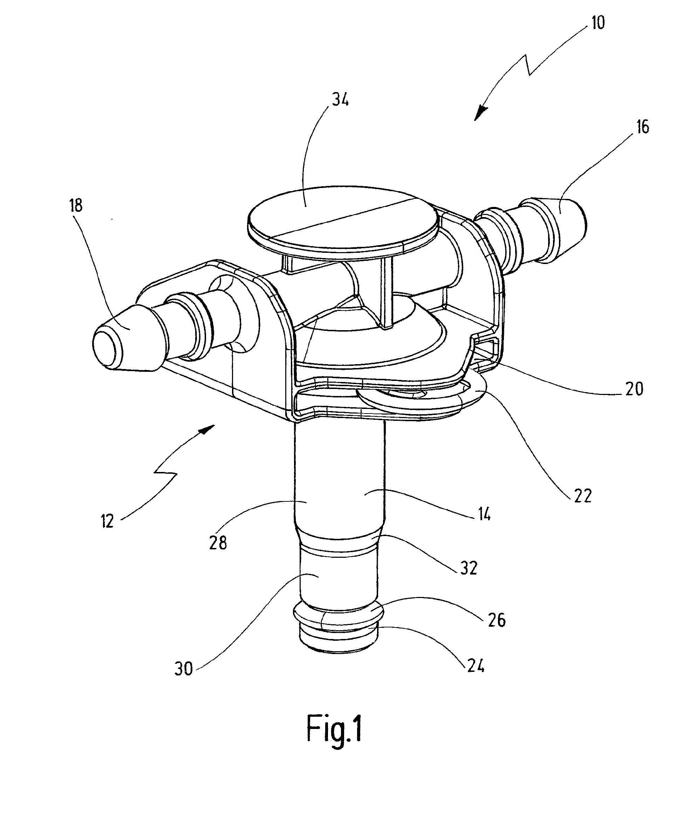

In Fig. 1 ist eine Steckverbindungsanordnung perspektivisch dargestellt und allgemein mit 10 bezeichnet.

Die Steckverbindungsanordnung 10 weist einen Grundkörper 12 auf, an dem eine Anschlussleitung 14 und zwei Anschlussstutzen 16, 18 ausgebildet sind. Die Anschlussleitung 14 und die Anschlussstutzen 16, 18 sind mittels einer inneren Fluidleitung miteinander verbunden und bilden ein T-Stück. In dem Grundkörper 12 ist eine Einschuböffnung 20 ausgebildet, die sich in radialer Richtung der Anschlussleitung 14 erstreckt. In der Einschuböffnung 20 ist ein Fixierelement 22 angeordnet, das sich in dieser Einbau- bzw. Vormontageposition bis wenigstens zu der Anschlussleitung 14 erstreckt. Die Anschlussleitung 14 weist an einem distalen Ende eine umfängliche Nut 24 auf, in dem ein Dichtelement 26 in Form eines O-Rings 26 aufgenommen ist. Die Anschlussleitung 14 weist einen ersten Abschnitt 28 und einen zweiten Abschnitt 30 auf, die unterschiedliche Durchmesser aufweisen und über einen Verjüngungsabschnitt 32 miteinander verbunden sind. Der erste Abschnitt 28 weist dabei einen größeren Durchmesser auf als der zweite Abschnitt 30. An einem der Anschlussleitung 14 gegenüberliegenden Ende des Grundkörpers 12 ist ein tellerförmiger Montageabschnitt 34 ausgebildet, an dem die Steckverbindungsanordnung 10 ergriffen werden kann und in axialer Richtung der Anschlussleitung 14 in einen nicht dargestellten Anschlussstutzen eingeführt werden kann.

Die Steckverbindungsanordnung 10 dient grundsätzlich dazu, in Fig. 1 nicht dargestellte Fluidleitungen miteinander zu verbinden. Dabei werden zwei Fluidleitungen mit den Anschlussstutzen 16, 18 verbunden und eine dritte Fluidleitung mittels des Anschlussstutzens mit der Anschlussleitung 14 verbunden. Dadurch kann die Steckverbindungsanordnung 10 eine dichte Verbindung zwischen den Fluidleitungen bilden. Die Verbindung des Anschlussstutzens mit der Anschlussleitung 14 erfolgt, indem der Anschlussstutzen auf die Anschlussleitung 14 aufgesteckt wird bzw. die Anschlussleitung 14 in den Anschlussstutzen eingeführt wird. Der O-Ring 26, der in der Nut 24 aufgenommen ist, dient dazu, die Anschlussleitung 14 gegenüber dem aufgesteckten Anschlussstutzen abzudichten. Das Fixierelement 22 ist in der radialen Einschuböffnung 20 eingeschoben bzw. angeordnet und in einer axialen Richtung der Anschlussleitung 14 fixiert, so dass das Fixierelement 22 beim Aufschieben des Anschlussstutzens auf die Anschlussleitung 14 in axialer Richtung nicht bewegt wird und den aufgeschobenen Anschlussstutzen in einer Einbauposition in axialer Richtung festlegen kann. Der Montageabschnitt 34 dient dazu, die Steckverbindungsanordnung 10 zu ergreifen und bei der Montage in axialer Richtung der Anschlussleitung 14 eine Kraft auf den Grundkörper 12 ausüben zu können, um somit die Anschlussleitung 14 so weit in den hier nicht dargestellten Anschlussstutzen hineinbewegen zu können, dass der Anschlussstutzen mittels des Fixierelements 22 in der Einbauposition festgelegt werden kann.

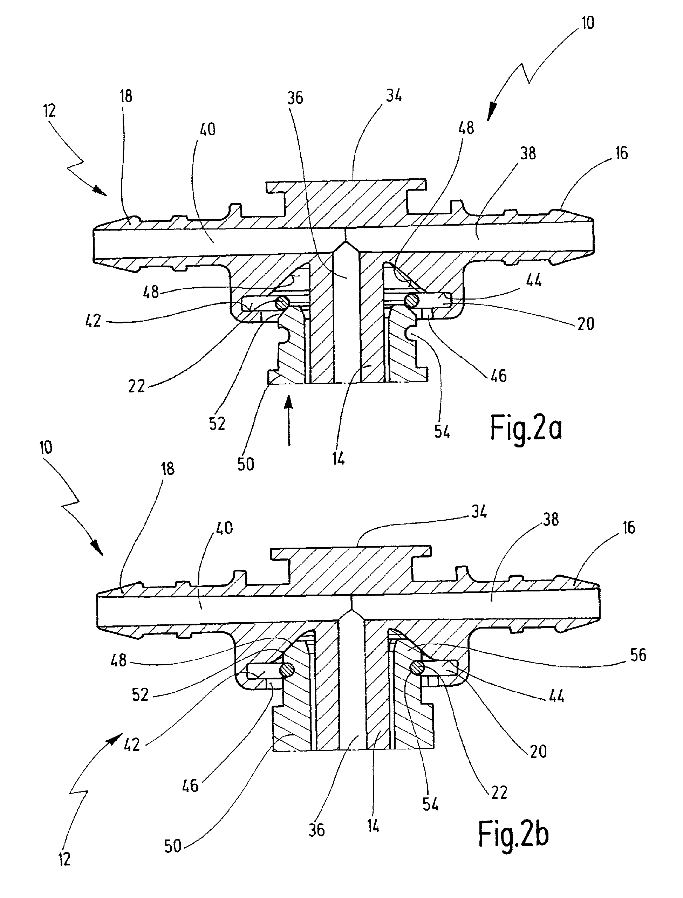

In Fig. 2a und b ist eine schematische Schnittansicht zur Erläuterung der Funktionsweise der Steckverbindungsanordnung 10 dargestellt.

In der Anschlussleitung 14 ist ein Leitungsabschnitt 36 ausgebildet und in den Anschlussstutzen 16, 18 ist jeweils ein Leitungsabschnitt 38, 40 ausgebildet. Die Leitungsabschnitte 36, 38, 40 sind miteinander verbunden und bilden das T-Stück. Die radiale Einschuböffnung ist zwischen einer ersten Führungsfläche 42 und einer zweiten Führungsfläche 44 als schlitzförmige Öffnung gebildet. Die Führungsflächen 42, 44 sind orthogonal zu einer Längsachse der Anschlussleitung 14 ausgebildet. In dem Grundkörper 12 bzw. in der Führungsfläche 42 ist eine Ausnehmung 46 um die Anschlussleitung 14 herum ausgebildet. An dem Grundkörper 12 ist ein Axialanschlag 48 ausgebildet, der an einem proximalen Ende der Anschlussleitung 14 angeordnet ist. Der Anschlag 48 ist wenigstens abschnittsweise kegelförmig und koaxial zu der Anschlussleitung 14 ausgebildet.

Auf die Anschlussleitung 14 ist ein Anschlussstutzen 50 aufgesteckt. Der Anschlussstutzen 50 ist koaxial zu der Anschlussleitung 14 angeordnet und in die Ausnehmung 46 eingeführt. Der Anschlussstutzen 50 weist an einem Ende eine Fase 52 auf, die schräg zu einer äußeren Umfangsfläche des Anschlussstutzens 50 ausgebildet ist. Mit anderen Worten ist die Fase 52 wenigstens abschnittsweise in etwa kegelförmig ausgebildet. Der Anschlussstutzen 50 weist ferner eine Nut 54 auf, die wenigstens abschnittsweise umfänglich ausgebildet ist und in axialer Richtung des Anschlussstutzens 50 von der Fase 52 beabstandet ist.

In der in Fig. 2a dargestellten schematischen Schnittansicht ist der Anschlussstutzen 50 in die Ausnehmung 46 eingeführt, so dass die Fase 52 an dem Fixierelement 22 zur Anlage kommt. Da das Fixierelement 22 in axialer Richtung fixiert ist und zwischen den Führungsflächen 42, 44 in radialer Richtung beweglich gelagert ist, bewegt die Fase 52 das Fixierelement 22 in radialer Richtung, wenn der Anschlussstutzen in axialer Richtung auf die Anschlussleitung 14 aufgeschoben wird. Mit anderen Worten wird das Fixierelement 22 nach außen in radialer Richtung aufgeweitet und in radialer Richtung gespannt. Um die radiale Vorspannung zu erzielen, ist das Fixierelement 22 aus einem federnden Material gebildet, wie z.B. aus einer Metallklammer oder einer Kunststoffklammer.

Durch die besondere Ausgestaltung des Grundkörpers 12, des Fixierelements 22 und des Anschlussstutzens 50 kann somit das bereits in der Einschuböffnung 20 vormontierte Fixierelement 22 in radialer Richtung bewegt und aufgeweitet werden, so dass der Anschlussstutzen 50 in eine Endposition bewegt werden kann.

In Fig. 2b ist eine schematische Schnittansicht des Grundkörpers 12 dargestellt, die im Wesentlichen der Darstellung aus Fig. 2a entspricht. Gleiche Elemente sind mit gleichen Bezugsziffern bezeichnet, wobei hier lediglich die Besonderheiten erläutert sind. In Fig. 2b ist im Unterschied zu Fig. 2a der Anschlussstutzen 50 in eine Endposition bzw. eine Endmontageposition bewegt, in der er mittels des Fixierelementes 22 festgelegt ist. In der Endposition liegt die Fase 52 des Anschlussstutzens 50 an dem Anschlag 48 des Grundkörpers 12 an. Die Fase 52 und der Anschlag 48 weisen denselben Winkel zu der Längsachse der Anschlussleitung 14 auf, so dass die Fase 52 an dem Anschlag 48 flächig zur Anlage kommt. Das Fixierelement 22 ist in der Endposition in der Nut 54 aufgenommen und legt den Anschlussstutzen 50 in der Endposition in axialer Richtung der Anschlussleitung 14 fest.

Durch die radiale Vorspannung des Fixierelements 22, die mittels der Fase 52 durch das Einschieben des Anschlussstutzens 50 bewirkt wird, bewegt sich das Fixierelement 22 durch die so eingerichtete Vorspannkraft in die Nut 54. Dadurch, dass das Fixierelement 22 zwischen den Führungsflächen 42 und 44 in der Einschuböffnung 20 in axialer Richtung fixiert ist, wird der Anschlussstutzen 50 in der Einbauposition durch das Fixierelement in axialer Richtung festgelegt.

Durch die besondere Ausbildung des Grundkörpers 12, des Fixierelements 22 und des Anschlussstutzens 50 kann der Anschlussstutzen 50 auf die Anschlussleitung 14 bis in die Einbauposition aufgeschoben werden und wird dadurch ohne weiteren Montageschritt in der Einbauposition festgelegt. Um das Aufstecken zu erleichtern, ist der Montageabschnitt 34 an einer der Anschlussleitung 14 gegenüberliegenden Seite des Grundkörpers ausgebildet. Dadurch kann bei der Montage einfach beispielsweise mit einem Finger oder einem Montagegerät eine Kraft auf den Montageabschnitt ausgeübt werden, um den Anschlussstutzen 50 in die Einbauposition zu bewegen.

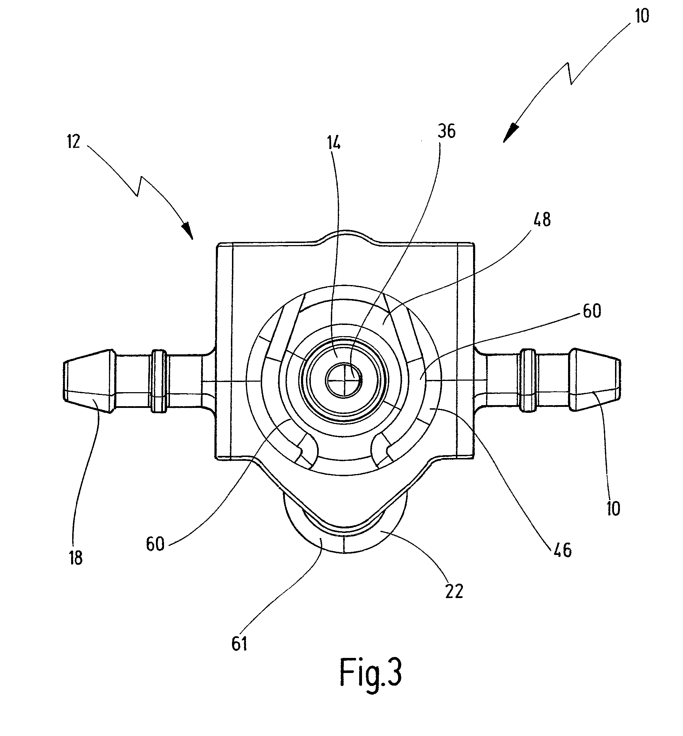

In Fig. 3 ist die Steckverbindungsanordnung 10 in einer axialen Blickrichtung der Anschlussleitung 14 schematisch dargestellt. Gleiche Elemente sind mit gleichen Bezugsziffern bezeichnet, wobei hier lediglich die Besonderheiten erläutert sind.

Das Fixierelement 22 ist in der Einschuböffnung 20 zwischen den Führungsflächen 42, 44 angeordnet. Das Fixierelement 22 ist in einer Vormontageposition in der Einschuböffnung 20 eingesetzt, so dass in dieser Vormontageposition der Anschlussstutzen 50 in die Ausnehmung 60 eingeführt werden kann bzw. auf die Anschlussleitung 14 aufgesteckt werden kann. Das Fixierelement 22 weist einen Fixierabschnitt 60 auf, der wenigstens abschnittsweise kreisförmig ausgebildet ist und in der Vormontageposition koaxial zu der Anschlussleitung 14 angeordnet ist. Das Fixierelement 22 ist als bogenförmige Klammer aus einem elastischen bzw. federnden Material ausgebildet, so dass zwei gegenüberliegende Fixierabschnitte 60 durch die Fase 52 in radialer Richtung bewegt bzw. aufgeweitet werden können und das Fixierelement 22 in radialer Richtung vorgespannt werden kann. Das Fixierelement 22 weist ferner einen Griffabschnitt 61 auf, an dem das Fixierelement 22 ergriffen werden kann und in die Einschuböffnung 20 eingeführt bzw. aus der Einschuböffnung 20 herausgezogen werden kann.

Koaxial zu der Anschlussleitung 14 und dem entsprechenden Leitungsabschnitt 36 ist der kegelförmige Anschlag 48 und die Ausnehmung 46 angeordnet bzw. ausgebildet.

Durch diese Vormontageposition des Fixierelements 22 und die besondere Ausgestaltung des Grundkörpers 12, des Fixierelements 22 und des Anschlussstutzens 50 kann der Anschlussstutzen 50 mit der Steckverbindungsanordnung 10 durch einfaches Aufstecken auf die Anschlussleitung 14 eine feste und dichte Verbindung bilden. Dabei muss lediglich eine entsprechende Kraft in axialer Richtung der Anschlussleitung 14 aufgebracht werden, um das Fixierelement 22 bzw. den Fixierabschnitt 60 in radialer Richtung zu bewegen und entsprechend vorzuspannen. In der Einbauposition rastet dann der Fixierabschnitt 60 in die Nut 54 des Anschlussstutzens 50 und legt den Anschlussstutzen 50 in axialer Richtung fest. Dadurch kann mit geringem Montageaufwand eine dichte und zuverlässige Verbindung zwischen der Steckverbindungsanordnung 10 und dem Anschlussstutzen 50 gebildet werden.

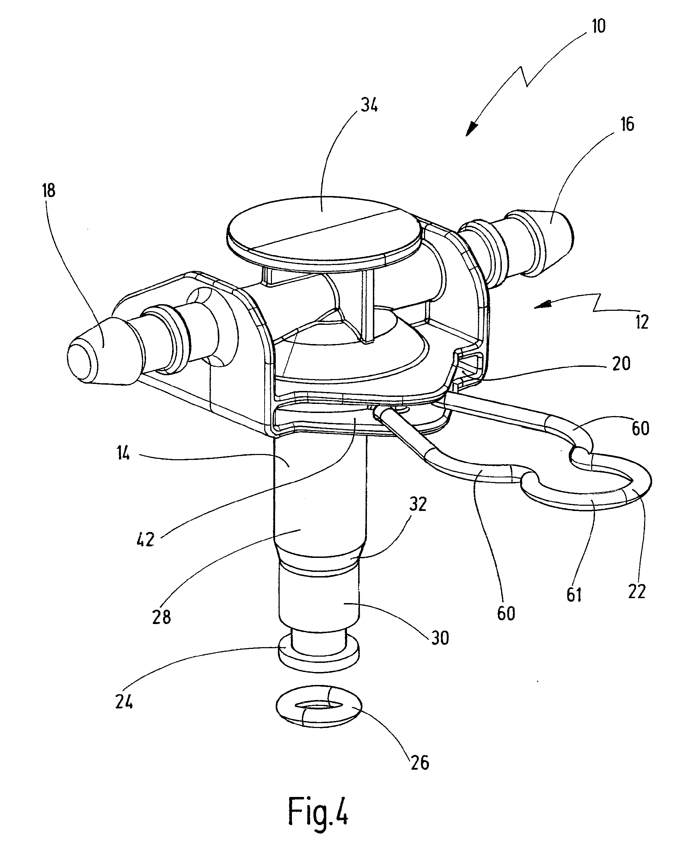

In Fig. 4 ist die Steckverbindungsanordnung 10 in einer perspektivischen Explosionsdarstellung schematisch dargestellt. Gleiche Elemente sind mit gleichen Bezugsziffern bezeichnet, wobei hier lediglich die Besonderheiten erläutert sind.

Das Fixierelement 22 wird in radialer Richtung der Anschlussleitung 14 in die Einschuböffnung 20 eingeführt. Dabei ist das Fixierelement 22 in axialer Richtung zwischen den Führungsflächen 42, 44 fixiert, so dass das Fixierelement 22 lediglich in radialer Richtung bewegbar ist. Das Fixierelement 22 weist den Griffabschnitt 61 und den Fixierabschnitt 60 auf und ist als einseitig offene Klammer ausgebildet. An einem dem Griffabschnitt 61 gegenüberliegenden Ende des Fixierelements 22 ist die Klammer zwischen zwei Enden der Klammer offen ausgebildet. Die Enden der Klammer weisen einen geringeren Abstand voneinander auf als der Abstand der beiden Fixierabschnitte 60, so dass das Fixierelement 22 in der Vormontageposition in dem Grundkörper 12 fixiert ist. Dadurch lässt sich das Fixierelement 22 einfach und präzise in die Vormontageposition bringen, so dass die Endmontage des Anschlussstutzens 50 mit geringem Montageaufwand durchgeführt werden kann.

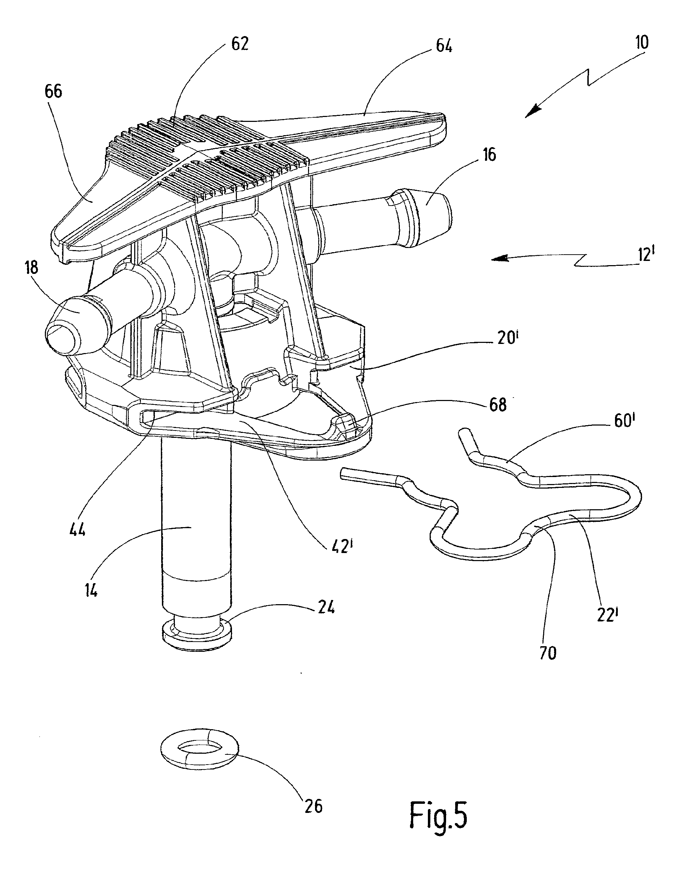

In Fig. 5 ist eine alternative Ausführungsform der Steckverbindungsanordnung 10 in einer perspektivischen Explosionsdarstellung dargestellt. Gleiche Elemente sind mit gleichen Bezugsziffern bezeichnet, wobei hier lediglich die Besonderheiten erläutert sind.

Der Grundkörper 12' weist die Anschlussstutzen 16, 18 auf, die in dieser Ausführungsform abgewinkelt zueinander angeordnet sind. Dies ist durch die besondere Einbauposition der Steckverbindungsanordnung 10 bedingt und ermöglicht eine definierte Schlauchbiegung von Schläuchen, die an den Anschlussstutzen 16, 18 angeschlossen werden. Durch die winklige Anordnung entfällt vorteilhafterweise beim Montieren der Steckverbindungsanordnung 10 der Arbeitsschritt, in dem die Anschlussschläuche gebogen werden müssen, um an den Anschlussstutzen 16, 18 angeschlossen zu werden. Oberhalb der Anschlussstutzen 16, 18 ist ein Montageabschnitt 62 ausgebildet, der als horizontale Fläche ausgebildet ist und dieselbe Funktion hat wie der Montageabschnitt 34 der ersten Ausführungsform. Von dem Montageabschnitt 62 erstrecken sich in derselben Ebene wie der Montageabschnitt 62 zwei Flügel 64, 66, die jeweils direkt oberhalb der Anschlussstutzen 16, 18 angeordnet sind. Die Flügel 64, 66 dienen als Schutz für die Anschlussstutzen 16, 18. Sofern bei der Montage der Steckverbindungsanordnung 10 Druck auf den Montageabschnitt 62 ausgeübt wird, kann durch die Flügel 64, 66 verhindert werden, dass die Anschlussstutzen 16, 18 oder die bereits angeschlossene Schlauchverbindung beschädigt werden.

Die Einschuböffnung 20' ist zwischen den Führungsflächen 42', 44' ausgebildet und dient dazu, das Fixierelement 22' aufzunehmen und in axialer Richtung der Anschlussleitung 14 zu führen. Die Führungsfläche 42' ist in radialer Richtung länger ausgebildet als die Führungsfläche 44, so dass ein Einführen des Fixierelements erleichtert ist. Das Fixierelement 22' kann somit auf die Führungsfläche 42' aufgelegt werden und in dieser Position in die Einschuböffnung 20' eingeführt werden. Die Führungsfläche 42' weist einen Radialanschlag 68 auf, an dem ein Anschlagabschnitt 70 des Fixierelements 22' beim Herausziehen des Fixierelementes 22' zur Anlage kommt. Bei Demontage des Anschlussstutzens 50 wird das Fixierelement 22' in radialer Richtung aus der Einschuböffnung 20' gezogen und durch den Radialanschlag 68 und den Anschlagabschnitt 70 vor einem vollständigen Herausziehen gehindert. Dadurch ist eine sichere Demontage der Steckverbindungsanordnung 10 möglich.

Das Fixierelement 22' ist an einem dem Griffabschnitt 61' gegenüberliegenden Ende als offene Klammer ausgebildet, wobei die Enden der Klammer einen größeren Abstand zueinander aufweisen als die Fixierabschnitte 60'. Dadurch wird ein Einführen des Fixierelements 22' in die radiale Einschuböffnung 20' erleichtert.

Im Ergebnis kann somit die Steckverbindungsanordnung 10 aus Fig. 5 noch einfacher und noch zuverlässiger montiert werden.

Es versteht sich, dass der Grundkörper auch mit lediglich einem der Anschlussstutzen 16, 18 oder mit mehr als zwei der Anschlussstutzen 16, 18 ausgebildet sein kann.

Die Steckverbindungsanordnung 10 dient vorzugsweise als Leckölstecker, um überschüssigen Treibstoff einer Verbrennungskraftmaschine wieder in den Tank zurückzuführen, um ihn der Verbrennungskraftmaschine wieder zuzuführen.

## Patentansprüche

1. Steckverbindungsanordnung (10) zum lösbaren Verbinden von Fluidleitungen, mit:
- einem Grundkörper (12), der eine Anschlussleitung (14) und eine radiale Einschuböffnung (20) aufweist, wobei der Grundkörper (12) mit einer ersten der Fluidleitungen verbindbar ist, und wobei ein Anschlussstutzen (50), der mit einer zweiten der Fluidleitungen verbindbar ist, auf die Anschlussleitung (14) aufsteckbar ist, um mit der Anschlussleitung (14) eine dichte Verbindung zu bilden, und
- einem Fixierelement (22), das in der radialen Einschuböffnung (20) aufgenommen und in der Einschuböffnung (20) in axialer Richtung der Anschlussleitung (14) fixiert ist, um den Anschlussstutzen (50) in einer Einbauposition festzulegen,
**dadurch gekennzeichnet, dass**
das Fixierelement (22) einen Fixierabschnitt (60) aufweist, der derart ausgebildet ist, dass der Fixierabschnitt (60) beim Aufstecken des Anschlussstutzens (50) in radialer Richtung bewegt und das Fixierelement (22) in radialer Richtung vorgespannt wird und den Anschlussstutzen (50) in der Einbauposition festlegt.

2. Steckverbindungsanordnung nach Anspruch 1, **dadurch gekennzeichnet, dass** das Fixierelement (22) eine Metallklammer (22) aufweist.

3. Steckverbindungsanordnung nach Anspruch 1 oder 2, **dadurch gekennzeichnet, dass** der Fixierabschnitt (60) in einer Vormontageposition, in der der Anschlussstutzen (50) auf die Anschlussleitung (14) aufgesteckt wird, wenigstens abschnittsweise koaxial zu der Anschlussleitung (14) angeordnet ist.

4. Steckverbindungsanordnung nach einem der Ansprüche 1 bis 3, **dadurch gekennzeichnet, dass** der Grundkörper (12) einen Axialanschlag (48) aufweist, an dem der Anschlussstutzen (50) in der Einbauposition zur Anlage kommt.

5. Steckverbindungsanordnung nach einem der Ansprüche 1 bis 4, **dadurch gekennzeichnet, dass** die Einschuböffnung (20) in radialer Richtung neben der Anschlussleitung (14) angeordnet ist.

6. Steckverbindungsanordnung nach einem der Ansprüche 1 bis 5, **dadurch gekennzeichnet, dass** die Einschuböffnung (20) als Schlitz (20) ausgebildet ist, der sich senkrecht zu einer Längsachse der Anschlussleitung (14) erstreckt und eine senkrecht zu der Anschlussleitung (14) ausgerichtete Führungsfläche (42) aufweist, an der das Fixierelement (22) geführt ist.

7. Steckverbindungsanordnung nach einem der Ansprüche 1 bis 6, **dadurch gekennzeichnet, dass** das Fixierelement (22) in der Einschuböffnung (20) in radialer Richtung beweglich gelagert ist.

8. Steckverbindungsanordnung nach einem der Ansprüche 1 bis 7, **dadurch gekennzeichnet, dass** ein Endabschnitt (56) des Anschlussstutzens (50) in der Einbauposition zwischen dem Axialanschlag (48) und der radialen Einschuböffnung (20) angeordnet ist.

9. Steckverbindungsanordnung nach einem der Ansprüche 1 bis 8, **dadurch gekennzeichnet, dass** der Axialanschlag (48) wenigstens abschnittsweise kegelförmig ausgebildet ist und die kegelförmigen Abschnitte (48) koaxial zu der Anschlussleitung (14) angeordnet sind.

10. Steckverbindungsanordnung nach einem der Ansprüche 1 bis 9, **dadurch gekennzeichnet, dass** der Grundkörper (12) einstückig mit der Anschlussleitung (14), dem Axialanschlag (48) und der Führungsfläche (42) ausgebildet ist.

11. Steckverbindungsanordnung nach einem der Ansprüche 1 bis 10, dass die Anschlussleitung (14) eine umfängliche Nut (24) aufweist, in der ein ringförmiges Dichtelement (26) angeordnet ist.

12. Steckverbindungsanordnung nach einem der Ansprüche 1 bis 11, **dadurch gekennzeichnet, dass** der Grundkörper (12) einstückig mit wenigstens einem zweiten Anschlussstutzen (16, 18) ausgebildet ist, der mit einer der Fluidleitungen verbindbar ist.
